**Europäisches Patentamt**

(19) **European Patent Office**

**Office européen des brevets**

(11) Numéro de publication: **0 275 723 B1**

(12) # FASCICULE DE BREVET EUROPEEN

(45) Date de publication du fascicule du brevet:
06.06.90

(51) Int. Cl.⁵: **B62M 25/04**

(21) Numéro de dépôt: **87402656.0**

(22) Date de dépôt: **24.11.87**

(54) **Dispositif de commande à indexation pour dérailleur de cycle.**

(30) Priorité: **27.11.86 FR 8616567**

(43) Date de publication de la demande:
**27.07.88 Bulletin 88/30**

(45) Mention de la délivrance du brevet:
**06.06.90 Bulletin 90/23**

(84) Etats contractants désignés:
**BE DE FR GB IT LU NL**

(56) Documents cités:
**EP-A- 0 157 983**
**FR-A- 2 551 569**
**FR-A- 2 578 507**
**FR-A- 2 579 163**
**FR-A- 2 585 796**

(73) Titulaire: **SACHS INDUSTRIES S.A. (HURET ET MAILLARD REUNIS), 60 Avenue Félix-Faure, F-92000 Nanterre(FR)**

(72) Inventeur: **Desenclos, Christian, 80, rue des Prés, F-80132 L'Heure(FR)**
Inventeur: **Sinoquet, Régis, 29, rue de Feuquières, Saucourt§F-80390 Fressenneville(FR)**

(74) Mandataire: **Moncheny, Michel et al, c/o Cabinet Lavoix 2 Place d'Estienne d'Orves, F-75441 Paris Cedex 09(FR)**

## Description

La présente invention concerne les dispositifs de commande pour dérailleurs de cycles.

On connaît dans l'état de la technique de nombreux dispositifs de commande pour derailleurs de cycles, comprenant un support destiné à être fixé sur une partie du cadre ou du guidon du cycle et sur lequel est montée à rotation une manette de commande reliée à une extrémité d'un câble d'actionnement, dont l'autre extrémité est reliée au dérailleur.

Il existe deux grands types de dispositifs de commande, les uns étant munis de moyens de friction disposes entre la manette et le support et destinés à immobiliser la manette dans la position choisie, et les autres étant munis de moyens d'indexation entre ces éléments. Ces moyens d'indexation comportent des crans ou moyens équivalents qui permettent de déterminer avec précision les différentes positions de la manette correspondant à l'établissement des différents rapports de transmission. Ces positions indexées sont déterminées en fonction de différents paramètres et notamment du pas entre les pignons de la roue libre, ce qui fait que lorsqu'on monte une roue libre dont les pignons présentent un pas différent de celui prévu à l'origine, les moyens d'indexation d'un tel dispositif de commande sont inutilisables.

On a donc proposé un troisième type de dispositifs de commande, qui est une combinaison des deux types mentionnés précédemment. Ces dispositifs permettent à un utilisateur de sélectionner à volonté le fonctionnement de la manette, soit avec indexation des différents rapports, soit avec friction.

On a cependant abouti à des ensembles relativement complexes, cette complexité pouvant se traduire par un défaut de fiabilité et par un coût relativement élevé.

Le FR-A-2.585.796 (SHIMANO), ayant une date de priorité plus ancienne mais publié après la date de dépôt de la présente demande, décrit un dispositif de commande pour dérailleur de cycle comprenant des moyens de réglage permettant l'adaptation des moyens d'indexation dans le cas où l'on souhaite remplacer une roue libre par exemple à six pignons par une roue libre à sept pignons. Les moyens d'indexation comportent dans ce but une série de six portions d'engagement et une série de sept portions d'engagement correspondant respectivement aux nombres de pignons des deux roues libres différentes. Les moyens de réglage donnent la possibilité de choisir l'une ou l'autre des séries de portions d'engagement. Cependant, ce dispositif manque de souplesse car il ne prévoit pas le cas où les distances axiales entre les pignons diffèrent d'une roue libre à une autre.

Le but de l'invention est donc de résoudre les problèmes mentionnés précédemment, en proposant un dispositif de commande pour dérailleurs de cycles qui soit simple, fiable, d'un prix de revient peu élevé et qui soit facilement adaptable à des roues libres présentant des distances ou pas différents entre les pignons dentés qui les constituent.

A cet effet, l'invention a pour objet un dispositif de commande pour dérailleurs de cycles, comportant un support adapté pour être fixé sur une partie du cadre ou du guidon du cycle, une manette d'entraînement d'un câble d'actionnement du dérailleur, mobile en rotation autour d'un axe (X-X) par rapport à ce support, des moyens d'indexation entre la manette et le support, et des moyens de réglage des moyens d'indexation, caractérisé en ce que les moyens de réglage définissent un pas variable entre deux positions successives des moyens d'indexation.

Selon une caractéristique particulière de l'invention, les moyens d'indexation comprennent un organe solidaire de la manette et pourvu d'au moins une série d'évidements coopérant avec un organe de positionnement porté par une pièce fixe solidaire du support, les moyens de réglage du pas variable des moyens d'indexation comprenant ledit organe solidaire de la manette et dont les évidements sont constitués par des rainures ou fentes divergentes définissant entre elles des pas de valeur croissante suivant leur longueur, la pièce fixe solidaire du support dans laquelle chaque organe de positionnement est monté déplaçable pour occuper dans les rainures ou les fentes de l'organe solidaire de la manette des positions correspondant au pas d'indexation recherché et un organe de déplacement desdits organes de positionnement dans la pièce fixe solidaire du support.

L'invention sera mieux comprise à l'aide de la description qui va suivre, donnée uniquement à titre d'exemple et faite en se référant aux dessins annexés, sur lesquels :

- la Fig. 1 est une demi-vue achématique en coupe axiale d'un dispositif de commande à indexation suivant l'invention ;

la Fig. 2 est également une demi-vue schématique en coupe axiale du dispositif, mais dans une position de fonctionnement adaptée à une roue libre différente ;

- les Figs. 3a, 3b, 4 et 5 sont des vues en plan représentant respectivement trois des pièces entrant dans la constitution du dispositif représenté aux Figs. 1 et 2 ;

- les Figs. 6 et 7 sont deux demi-vues en coupe axiale représentant une variante du dispositif dans deux positions de fonctionnement adaptées à deux roues libres différentes ;

- la Fig. 8 est une vue éclatée en perspective représentant les pièces essentielles entrant dans la construction du dispositif représenté aux Figs. 6 et 7.

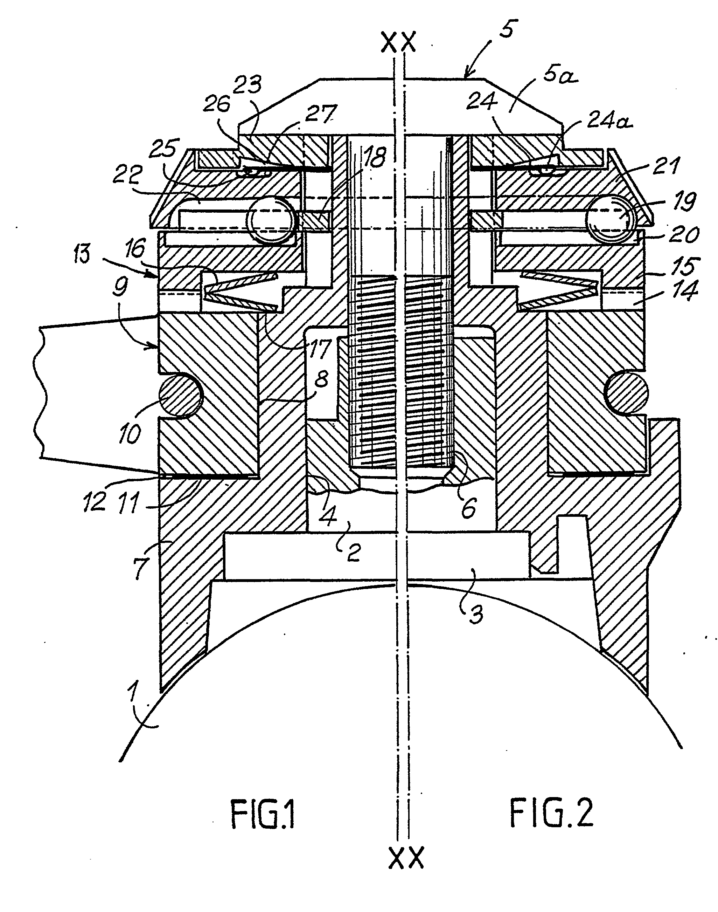

On a représenté aux Figs. 1 et 2 une partie d'un tube 1 de cadre ou de guidon d'un cycle. Sur ce tube est fixé par tout moyen convenable un support qui, dans l'exemple représenté, est constitué par un plot 2 brasé sur le tube et comportant une embase carrée 3 et une partie cylindrique 4 munie, le cas échéant, de méplats.

Sur ce plot est fixé au moyen d'une vis 5 coopérant avec un filetage interne 6 du plot, un organe intermédiaire 7 qui constitue une sorte d'adapteur entre le support que constitue le plot brasé et le reste du dispositif. Cet organe intermédiaire épouse à sa base la forme du tube et délimite une surface externe cylindrique 8 servant de guidage pour une manette 9. Cette dernière, qui n'est représentée qu'en partie sur le dessin est constituée, comme à l'habitude, d'un levier, monté rotatif autour de l'axe X-X du plot 2 et sur lequel est accrochée l'extrémité d'un câble 10 d'actionnement du dérailleur. L'organe 7 délimite ensuite une surface radiale 11 perpendiculaire à l'axe X-X, constituant une surface d'appui pour une rondelle 12 interposée entre la manette 9 et l'adaptateur 7.

Le dispositif représenté aux Figs. 1 et 2 comporte en outre un organe d'indexation en forme de rondelle 13 entraîné en rotation par la manette 9 à l'aide d'une denture axiale 14 de celle-ci en prise permanente avec une denture axiale complémentaire 15 de la rondelle 13. Cette rondelle 13 est en outre montée axialement déplaçable sur l'adaptateur 7 et est sollicitée par des rondelles élastiques 16 de type Belleville disposées entre la manette 9 et la rondelle 13 et prenant appui sur l'une des faces de la rondelle 13 et sur un épaulement 17 de l'adaptateur 7. L'autre face de la rondelle d'indexation 13 est en contact avec une rondelle 18 montée fixe sur l'adaptateur 7. La rondelle 18 sert à loger et guider deux organes de positionnement en forme de billes 19 montés de façon diamétralement opposée dans celle-ci. La face de la rondelle 13 opposée à la face comportant la denture 15 est munie de deux séries d'évidements 20 diamétralement opposées deux à deux pouvant recevoir partiellement les billes 19. Une rondelle de sélection de pas 21 est montée rotative sur l'adaptateur 7 en regard de la rondelle fixe 18. La rondelle de sélection 21 est munie de deux évidements 22 pouvant recevoir partiellement les deux billes 19. Une rondelle de blocage 23 est montée fixe sur l'adaptateur 7 entre la rondelle de sélection 21 et la tête 5a de la vis 5. Une mince rondelle 24 en acier à ressort par exemple est interposée fixe en rotation entre la rondelle de sélection 21 et la rondelle 23 et porte deux organes de blocage 24a diamétralement opposés constitués chacun par une languette munie d'un ergot escamotable 25 coopérant avec des creux 26 de la rondelle de sélection 21. La rondelle de blocage 23 est en outre munie, pour chaque languette, d'un évidement 27 dans lequel peut s'escamoter la languette 24a correspondante avec son ergot 25 lors de leur déplacement entre les creux 26.

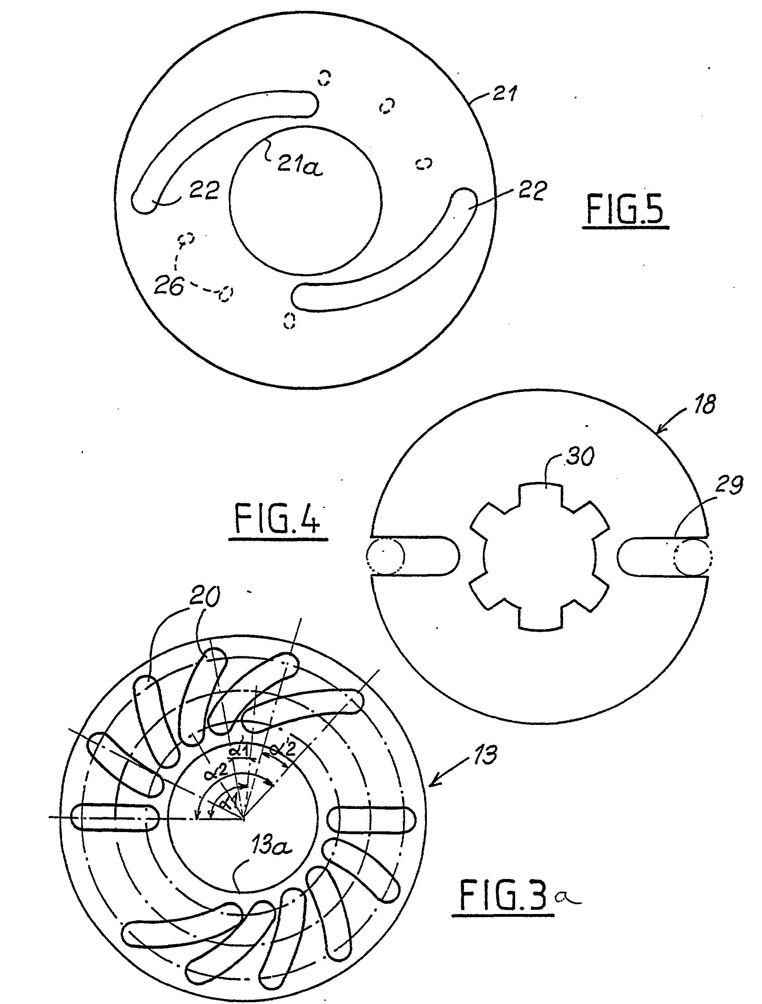

Les moyens d'indexation et de sélection de pas sont illustrés plus en détail sur les vues en plan des Figs. 3a à 5. La Fig. 3a montre la rondelle d'indexation 13 présentant un trou central 13a pour son montage à rotation sur l'adaptateur 7. Cette rondelle est, sur l'une de ses faces, pourvue de sa denture 15 (Fig. 1) et, sur l'autre, de deux séries d'évidements 20 en forme de rainures divergentes, diamétralement opposées deux à deux. Les rainures de chaque série s'étendent à partir de points régulièrement répartis sur une portion d'un petit cercle de la rondelle, proche de son trou central 13a. La première rainure 20 de chaque série est rectiligne et radiale. Les autres rainures 20 de chaque série sont curvilignes et s'étendent chacune en s'écartant progressivement par rapport au diamètre de la rondelle 13 passant par leur point de départ correspondant.

Lesdits écartements des rainures par rapport au diamètre de la rondelle 13 passant par leur point de départ sont tels que le pas d'une rainure à l'autre soit toujours bien défini si l'on se place sur un cercle de la rondelle, mais croissant suivant la longueur des rainures. Cela veut dire que le pas entre deux rainures 20 successives augmente progressivement lorsqu'on on s'écarte du bord intérieur de la rondelle vers sa périphérie.

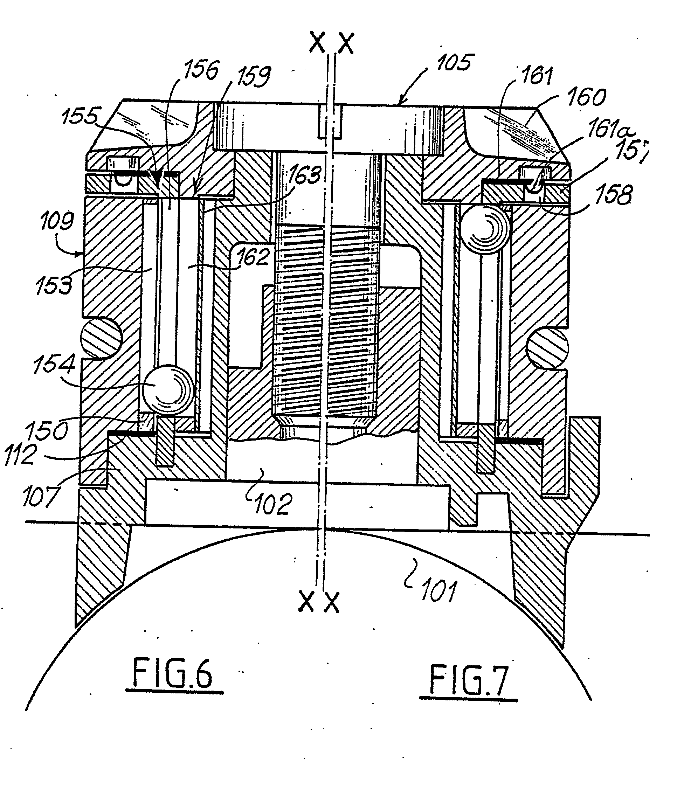

La Fig. 4 montre la rondelle 18 qui sert à guider les deux billes 19. A cet effet, cette rondelle comporte des fentes radiales rectilignes diamétralement opposées 29 pour guider les billes d'une position à une autre suivant leur longueur. La rondelle 18 est montée fixé sur l'adaptateur 7 par un trou central 30 muni de cannelures.

La Fig. 5 montre la rondelle de sélection 21 pourvue d'un trou central 21a pour son montage à rotation sur l'adaptateur 7. La rondelle 21 est munie comme indiqué plus haut de deux évidements 22 en forme de rainures courbes diamétralement opposées, s'étendant symétriquement l'une par rapport à l'autre, à partir de points diamétralement opposés sur un petit cercle de la rondelle vers des points diamétralement opposés sur un cercle de plus grand diamètre. Ces rainures définissent la course des billes lors de la sélection du pas d'indexation. La rondelle de sélection 21 est, sur son autre face, pourvue de creux 26 régulièrement répartis sur une portion d'un petit cercle de la rondelle et destinés à recevoir les ergots respectifs 25 de la rondelle intercalaire 24. Ces creux servent aussi à assurer la sélection des pas d'indexation et leur nombre, qui est dans le présent exemple de deux groupes de trois, correspond au nombre de pas différents possibles et donc également au nombre de positions des billes 19 suivant la longueur des rainures 20 de la rondelle d'indexation 13.

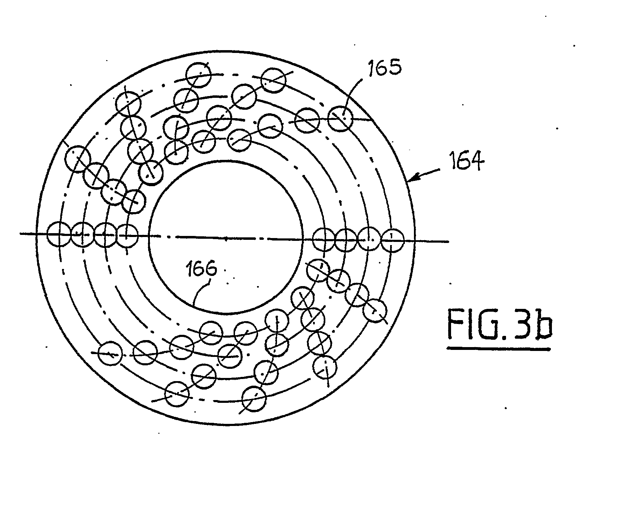

Suivant une variante de l'invention représentée à la figure 3b, la rondelle d'indexation 164 est munie sur l'une de ses faces de séries d'empreintes séparées 165, au lieu des rainures selon le mode de réalisation déjà décrit. Ces séries d'empreintes 165 sont disposées sur des lignes qui s'étendent de façon analogue auxdites rainures et les empreintes se trouvent aux points d'intersection entre ces lignes et des cercles concentriques de la rondelle d'indexation 164 indiquant les différents pas d'indexation. La rondelle d'indexation 164 présente par ailleurs un trou central 166 pour son montage à rotation sur l'adaptateur 7.

Ce mode de réalisation est avantageux en ce qu'il est ainsi possible de supprimer les moyens de blocage en rotation 23, 24, 25, 26, 27 puisque, dans ce cas, le pas d'indexation est indiqué par l'engagement des billes chacune dans une empreinte correspondante d'une série, ce qui assure également l'immobilisation en rotation de la rondelle de sélection 21 dans la position angulaire correspondant au pas d'indexation choisi.

Le fonctionnement de ce dispositif est le suivant : dans la position représentée à la Fig. 1, les billes 19 se trouvent dans leur position extrême intérieure. Cette position des billes 19 correspond au pas minimum des moyens d'indexation et donc à une certaine distance minimum entre les pignons de la roue libre. Pour changer de vitesse, on tourne la manette 9, ce qui entraîne également la rotation de la rondelle 13 d'indexation qui est rendue solidaire en rotation de la manette par les dentures 14 et 15. Les billes 19 logées et guidées dans les fentes 29 de la rondelle fixe 18 reposent dans des rainures diamétralement opposées de la rondelle 13 d'indexation correspondant à une vitesse choisie. Les billes sont en outre guidées dans les rainures 22 de la rondelle de sélection 21 et sont retenues par les fonds des rainures de la rondelle 21 lorsqu'on tourne la manette 9 avec la rondelle 13. Il en résulte que la bille 19 repousse la rondelle d'indexation 13 qui est déplacée axialement à l'encontre de l'action des rondelles Belleville 16 en vue de permettre le saut des billes 19 d'une paire de rainures 20 de la rondelle d'indexation 13 à la suivante correspondant à une vitesse différente.

On vient de décrire ci-dessus le fonctionnement des moyens d'indexation, c'est-à-dire des moyens de changement de vitesses. On va maintenant décrire le fonctionnement des moyens de sélection destinés à modifier le pas entre les différentes positions indexées de la manette 9 en fonction du nombre de pignons constituant une roue libre que l'on veut adapter sur une roue arrière de bicyclette. En effet, une roue libre par exemple à cinq pignons présente des intervalles entre pignons différents de ceux d'une roue libre à quatre ou six pignons. Si on souhaite passer d'une roue libre à six pignons à une roue libre à cinq pignons, il est donc nécessaire de modifier en conséquence le pas d'indexation de la manette.

Cette modification du pas d'indexation est réalisée comme suit. On suppose que la position extrême des billes 19 au fond des fentes 29 de la rondelle fixe 18 définit un pas d'indexation correspondant à une roue libre initiale à six pignons. Les rainures 20 de la rondelle d'indexation 13 correspondent chacune à une vitesse ou à un pignon de la roue libre.

Si l'on désire maintenant passer à une roue libre munie par exemple de cinq pignong, on change également le pas d'indexation de façon qu'il corresponde à la distance réelle entre les pignons de la roue libre de cinq pignons. Cette modification du pas est obtenue en tournant la rondelle de sélection 21 dans le sens inverse des aiguilles d'une montre de façon que les ergots 25 de la rondelle intercalaire 24 passent des creux 26 qu'elles occupent pour définir le pas d'indexation pour une roue libre à six pignons aux creux 26 indiquant une roue libre à cinq pignong. Cette rotation de la rondelle 21 provoque le déplacement des billes 19 entrainées par les rainures excentrées 22 de la rondelle de sélection 21 et guidées par les fentes 29 de la rondelle fixe 18. Les billes 19 sont ainsi déplacées dans leurs rainures 20 de la rondelle d'indexation 13 d'une position sur un petit cercle vers une position sur un cercle de plus grand diamètre de cette rondelle correspondant au nouveau pas désiré.

Le déplacement des billes 19 est facilité en plaçant au préalable la manette 9 en butée dans sa position extrême de départ dans laquelle les billes 19 se trouvent dans les rainures 20 rectilignes et radiales.

Dans l'exemple qui vient d'être décrit on obtient pour la manette 9 un angle de déplacement total qui est fonction du pas d'indexation choisi. On voit sur la Fig. 3 que cet angle peut varier entre un angle minimum $_1$ correspondant à la position des billes 19 dans les rainures 20, la plus proche du centre de la rondelle et un angle maximum $_2$ correspondant à la position des billes la plus éloignée du centre.

Par conséquent, l'angle de rotation de la manette pour faire passer les billes 19 d'une rainure 20 à la suivante va varier de façon correspondante. On voit par exemple sur la Fig. 3 que l'angle de passage $_1$ de l'avant-dernière rainure 20 à la dernière correspondant à la position des billes 19 la plus proche du centre de la rondelle est inférieure à l'angle de passage $_2$ correspondant à la position des billes la plus éloignée du centre.

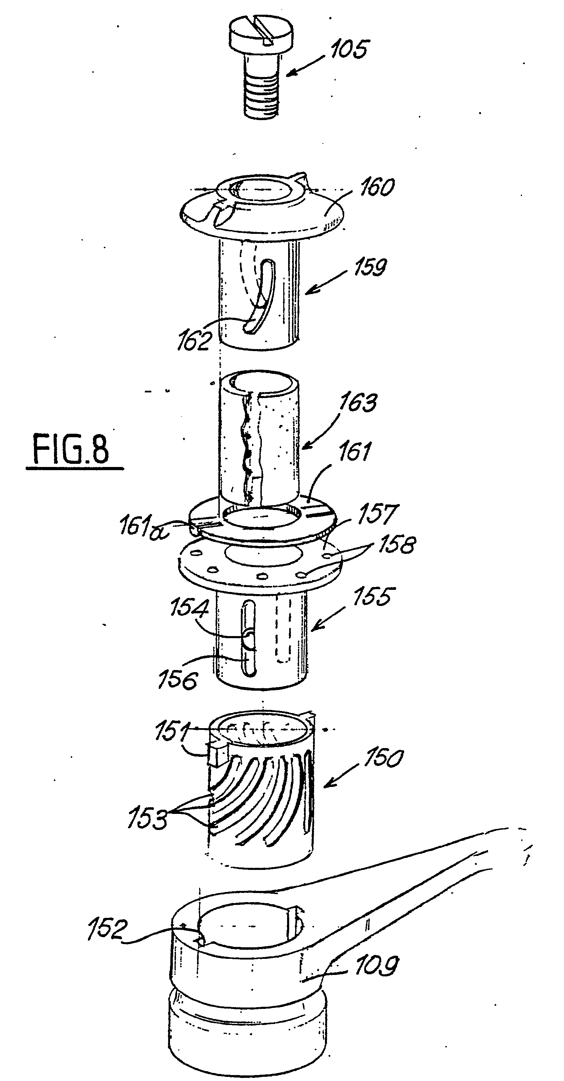

On a représenté aux Figures 6 à 8, une variante de réalisation d'un dispositif selon l'invention. Dans cette variante, les éléments correspondants à ceux du premier mode de réalisation sont désignés par les mêmes numéros de référence, augmentés de 100. Comme on peut le voir sur les Figures 6, 7 et 8, les moyens d'indexation et les moyens de réglage du pas d'indexation sont constitués par des éléments essentiellement cylindriques.

Les moyens d'indexation comportent un organe d'indexation en forme de manchon 150 monté sur un adaptateur 107 par l'intermédiaire d'une rondelle de friction 112 et engagé dans une manette 109. Il est entraîné en rotation par la manette à l'aide de deux ergots 151 diamétralement opposés, disposés sur la périphérie du manchon 150 et logés dans des évidements 152 de la manette 109.

Le manchon d'indexation 150 est en outre sur sa surface latérale muni de deux séries d'évidements en forme de fentes 153 diamétralement opposés deux à deux. La première fente est rectiligne et les autres curvilignes. Des premières extrémités des fentes 153 de chaque série de fentes se trouvent sur un grand cercle du manchon près de l'un des bords de celui-ci et sont disposées à intervalles réguliers les unes par rapport aux autres. Les fentes 153 s'étendent en divergeant vers un autre grand cercle du manchon près de l'autre bord de celui-ci, de sorte que les intervalles entre les fentes, considérés sur des grands cercles intermédiaires successifs du manchon, sont égaux entre eux mais croissants.

Les fentes 153 du manchon d'indexation 150 reçoivent partiellement des moyens de positionnement en forme de billes 154 logés et guidés dans un manchon fixe 155 engagé dans le manchon d'indexation 150, par deux fentes axiales rectilignes 156 diamétralement opposées ménagées dans ledit manchon 155. A l'une de ses extrémités, le manchon 155 est pourvu d'une collerette 157 munie d'empreintes 158, disposées diamétralement opposées deux à deux, et qui font partie des moyens de sélection de pas.

Les moyens de sélection de pas d'indexation comprennent en outre un manchon de sélection 159 pourvu d'une tête en papillon 160. Le manchon 159 est monté de façon que sa partie cylindrique se trouve à l'intérieur du manchon fixe 155, et que la partie inférieure de sa tête 160 repose sur la collerette 157 du manchon 155. Le manchon de sélection du pas d'indexation 159 reçoit une rondelle intercalaire 161 pourvue de deux tétons 161a diamétralement opposés, coopérant avec les empreintes 158 de la collerette 157 pour indiquer les différents pas d'indexation.

Le manchon de sélection du pas d'indexation est en outre pourvu de deux fentes hélicoïdales 162 diamétralement opposées, d'entraînement axial des billes 154, recevant partiellement les billes 154 et dont la largeur est suffisante pour permettre à ces billes 154 de se déplacer légèrement dans le sens radial.

Une douille à paroi élastique 163 est montée entre le manchon de sélection de pas d'indexation 159 et l'adaptateur 107. Cette douille 163 peut être Orcomprimée par les billes 154 lorsque celles-ci sont sollicitées radialement vers l'intérieur.

L'ensemble des pièces qui constituent les moyens d'indexation et de sélection de pas sont fixées au plot 102 solidaire du cadre 101 par une vis 105.

Le fonctionnement du dispositif qui vient d'être décrit est le suivant. Pour changer de vitesse, on tourne la manette 109, ce qui entraîne également la rotation du manchon d'indexation 150. Il en résulte que les billes 154 sont sollicitées radialement vers l'intérieur par les bords des fentes 153 du manchon d'indexation 150. Elles se déplacent légèrement en compriment la douille 163 et, sous l'action de la force de rappel exercée par la paroi élastique de cette douille, reprennent leur position radiale initiale lorsqu'elles se trouvent en face des fentes 153 correspondant à la vitesse suivante.

Pour modifier le pas d'indexation dans le cas où l'on souhaite passer d'une roue libre ayant par exemple cinq pignons à une autre roue libre ayant par exemple six pignons, on place tout d'abord la manette 109 en butée dans sa position angulaire extrême de départ, dans laquelle les billes 154 sont engagées dans les fentes rectilignes de chaque série de fentes 153 du manchon d'indexation 150. On tourne ensuite le manchon de sélection 159 dans le sens des aiguilles d'une montre jusqu'à ce que les tétons 161a de la rondelle intercalaire 161 qui se trouvaient initialement dans les empreintes 158 indiquant le pas d'indexation pour une roue libre à cinq pignons, s'engagent dans les empreintes 158 de la collerette 157 du manchon fixe 155. Cette rotation du manchon 159 entraîne le déplacement axial des billes 154 dans les fentes 156 du manchon fixe 155, sous l'action des fentes hélicoïdales 162 du manchon de sélection 159, jusqu'à ce qu'elles occupent dans les fentes 153 du manchon d'indexation 150 la position désirée correspondant à un pas d'indexation réduit adapté à une roue libre à six pignons.

Selon une variante de l'invention non représentée sur les dessins, le manchon d'indexation 150 peut comporter, au lieu des fentes 153, des ensembles de trous séparés, ces ensembles étant formés par des groupes de trous disposés sur des lignes qui s'étendent de façon analogue aux fentes 153 du manchon de sélection 150. Les trous de chaque groupe correspondant aux divers pas d'indexation se trouvent aux points d'intersection entre ces lignes et des grands cercles du manchon d'indexation 150 matérialisant ces différents pas.

Ce mode de réalisation est avantageux en ce qu'il est possible de supprimer la rondelle intercalaire 161 munie de ses tétons 161a et les empreintes 158 sur la collerette 157 du manchon 155, puisque l'engagement des billes dans les trous successifs le long desdites lignes assure également l'immobilisation en rotation du manchon de sélection dans la position angulaire correspondant au pas d'indexation choisi. Pour assurer la sélection du pas d'indexation dans de bonnes conditions, il est nécessaire, avant de procéder à cette sélection, de placer la manette du dispositif de commande dans sa position extrême dans laquelle les billes se trouvent chacune en regard d'une série de trous du manchon d'indexation alignés axialement.

Bien que dans l'exemple décrit en référence aux Figs. 1 à 5, la rondelle d'indexation 13 comporte des rainures 20 divergentes vers l'extérieur, il est également possible de prévoir que ces rainures soient divergentes vers le centre de cette rondelle, auquel cas, à la position des billes la plus proche du centre de la rondelle d'indexation, correspondraient des écartements ou pas maximums entre pignons.

Par ailleurs les rainures 20 de la rondelle d'indexation 13 peuvent être toutes rectilignes et disposées les unes par rapport aux autres sous des angles appropriés.

Bien entendu, dans le cas de rainures 20 divergentes vers le centre de la rondelle d'indexation 13, les pas obtenus seraient progressivement décroissants du centre de la rondelle 13 vers sa périphérie.

Les modes de réalisation décrits ci-dessus permettent tous de modifier le pas d'indexation d'un dispositif de commande de dérailleur afin de l'adapter à des roues libres différentes.

**Revendications**

1. Dispositif de commande pour dérailleur de cycle, comportant un support (7; 107) adapté pour être fixé sur une partie (1; 101) du cadre ou du guidon du cycle, une manette (9; 109) d'entraînement d'un câble d'actionnement (10) du dérailleur, mobile en rotation autour d'un axe (X-X) par rapport à ce support, des moyens d'indexation entre la manette et le support, et des moyens de réglage des moyens d'indexation, caractérisé en ce que les moyens de réglage définissent un pas variable entre deux positions successives des moyens d'indexation.

2. Dispositif suivant la revendication 1, dans lequel les moyens d'indexation comprennent un organe (13; 150) solidaire de la manette (9; 109) et pourvu d'au moins une série d'évidements (20; 153) coopérant avec un organe de positionnement (19; 154) porté par une pièce fixe (18; 155) solidaire du support (7; 107), caractérisé en ce que les moyens de réglage du pas variable des moyens d'indexation comprennent ledit organe (13; 150) solidaire de la manette et dont les évidements (20; 153) sont constitués par des rainures ou fentes définissant entre elles des pas de valeur variable suivant leur longueur, la pièce fixe (18; 155) solidaire du support (7; 107) dans laquelle chaque organe de positionnement (19; 154) est monté déplaçable pour occuper dans les rainures ou fentes de l'organe (13; 150) solidaire de la manette des positions correspondant au pas d'indexation recherché et un organe de déplacement (21; 159) desdits organes de positionnement (19; 154) dans la pièce fixe (18; 155) solidaire du support (17; 107).

3. Dispositif suivant la revendication 1, dans lequel les moyens d'indexation comprennent un organe (13; 150) solidaire de la manette (9; 109) et pourvu d'au moins une série d'évidements (20; 153) coopérant avec un organe de positionnement (19; 154) porté par une pièce fixe (18; 155) solidaire du support, caractérisé en ce que les moyens de réglage du pas variable des moyens d'indexation comprennent ledit organe (13; 150) solidaire de la manette et dont les évidements sont constitués par des ensembles d'empreintes ou trous disposées sur des lignes définissant entre elles des pas de valeur variable suivant leur longueur, la pièce fixe (18; 155) solidaire du support (7; 107) dans laquelle chaque organe de positionnement (19; 154) est monté déplaçable pour occuper dans les empreintes ou trous de l'organe (13; 150) solidaire de la manette des positions correspondant au pas d'indexation recherché et un organe de déplacement (21; 159) desdits organes de positionnement (19; 154) dans la pièce fixe (18; 155) solidaire du support (7; 107).

4. Dispositif suivant l'une des revendications 2 et 3, caractérisé en ce que ledit organe solidaire de la manette (9) est constituée par une rondelle d'indexation (13) pourvue sur une de ses faces de deux séries de rainures (20) divergentes ou de deux ensembles d'empreintes disposées sur des lignes divergentes diamétralement opposées deux à deux, destinées à recevoir des organes de positionnement en forme de billes (19) et comportant sur son autre face une denture axiale (15) coopérant avec une denture axiale complémentaire (14) de ladite manette (9), ladite rondelle d'indexation étant appliquée contre ledit organe (21) de déplacement des billes (19) par des moyens élastiques (16) interposés entre le support (7) et ladite rondelle d'indexation (13), les billes (19) étant ainsi maintenues entre la rondelle d'indexation (13) et l'organe de déplacement (21).

5. Dispositif suivant la revendication 4, caractérisé en ce que lesdites rainures (20) ou lesdites lignes sur lesquelles sont disposées les séries d'empreintes sont divergentes vers l'extérieur de ladite rondelle d'indexation (13).

6. Dispositif suivant la revendication 4, caractérisé en ce que lesdites rainures (20) ou lesdites lignes sur lesquelles sont disposées les séries d'empreintes sont divergentes vers l'intérieur de ladite rondelle d'indexation (13).

7. Dispositif suivant l'une des revendications 4 à 6, caractérisé en ce que la pièce fixe (18) solidaire du support (7) est constituée par une rondelle interposée entre la rondelle d'indexation (13) et l'organe (21) de déplacement, ladite rondelle fixe (18) étant pourvue de deux fentes radiales, diamétralement opposées dans chacune desquelles est montée déplaçable une desdites billes (19).

8. Dispositif suivant les revendications 4 à 7, caractérisé en ce que l'organe (21) de déplacement des billes (19) est constitué par une rondelle de sélection munie sur sa face en regard des billes (19) de deux évidements (22) en forme de rainures courbes s'étendant symétriquement l'une par rapport à l'autre, à partir de points diamétralement opposés situés sur un petit cercle de ladite rondelle vers des points diamétralement opposés situés sur un cercle de plus grand diamètre de celle-ci, les billes (19) étant maintenues dans lesdites rainures (22) au travers des fentes radiales (29) de la rondelle fixe (18) sous l'action desdits moyens élastiques (16), la longueur des rainures (22) de l'organe de déplacement (21) définissant la course des billes lors de la sélection du pas d'indexation.

9. Dispositif suivant la revendication 8, caractérisé en ce que la rondelle de sélection (21) comporte sur sa face opposée auxdites rainures (22) des creux (26) régulièrement répartis sur une portion d'un petit cercle de la rondelle destinés à assurer la sélection du pas d'indexation et en ce qu'il comporte en outre une rondelle intercalaire (24) pourvue d'ergots escamotables (25) d'immobilisation en rotation de la rondelle de sélection (21) dans des positions correspondant aux pas présélectionnés, par engagement dans les creux (26) correspondants de ladite rondelle de sélection.

10. Dispositif suivant l'une des revendications 4 à 8, caractérisé en ce que lesdits évidements de la rondelle d'indexation (13) étant constitués par un ensemble d'empreintes séparées s'étendant suivant des lignes divergentes de ladite rondelle, lesdites empreintes (20) assurent directement avec les billes (19), l'immobilisation de l'organe de sélection (21) dans la position angulaire correspondant au pas choisi.

11. Dispositif suivant l'une des revendications 4 à 10, caractérisé en ce que lesdites séries de rainures (20) ou bien lesdits ensembles de trous séparés de la rondelle d'indexation (13) comprennent une première rainure (20) radiale ou bien un premier groupe de trous disposés radialement sur ladite rondelle, les autres rainures ou bien les autres groupes de trous étant respectivement curvilignes ou bien étant disposés sur des lignes incurvées.

12. Dispositif suivant l'une des revendications 4 à 8, caractérisé en ce que lesdites séries de rainures ou bien lesdits ensembles de trous séparés de la rondelle d'indexation (13) sont respectivement constitués par des rainures rectilignes disposées les unes par rapport aux autres suivant des angles déterminés ou par des groupes de trous disposés suivant des lignes droites faisant entre elles des angles déterminés.

13. Dispositif suivant l'une des revendications 2 et 3, caractérisé en ce que ledit organe solidaire de la manette (109) est constitué par un manchon d'indexation (150) pourvu sur sa surface latérale de deux séries de fentes divergentes (153) ou de deux ensembles de trous séparés disposés sur des lignes divergentes, diamétralement opposés deux à deux, destinés à recevoir des organes de positionnement en forme de billes (154), ledit manchon d'indexation (150) étant engagé dans la manette (109) et rendu solidaire en rotation de celle-ci, et entourant un manchon fixe (155) qui constitue ladite pièce fixe solidaire du support (107) et qui est pourvu de deux fentes axiales (156) diamétralement opposées de guidage des billes (154), ledit organe (159) de déplacement des billes étant formé par un manchon de sélection (159) monté à rotation dans ledit manchon fixe (155) et étant pourvu de fentes hélicoïdales (162) diamétralement opposées d'entraînement desdites billes (154) maintenues dans les fentes axiales (156) du manchon fixe (155), les billes étant appliquées contre les fentes (153) ou trous séparés du manchon d'indexation (150) au travers des fentes hélicoïdales (162) du manchon de sélection (159) et des fentes axiales (156) du manchon fixe (155) par une douille (163) à paroi élastique montée à l'intérieur du manchon de sélection (159).

14. Dispositif suivant la revendication 13, caractérisé en ce que le manchon de sélection (159) comporte une tête de manoeuvre (160) qui reçoit une rondelle intercalaire (161) pourvue de têtons (161a) diamétralement opposés coopérant avec des empreintes (158) de détermination du pas d'indexation, ménagées dans une collerette (157) du manchon fixe (155).

15. Dispositif suivant la revendication 13, caractérisé en ce que ledit manchon d'indexation (150) étant pourvu d'ensembles de trous séparés disposés sur des lignes divergentes, ces trous assurent directement avec les billes (154) l'immobilisation de l'organe de sélection (159) dans la position angulaire correspondant au pas choisi.

16. Dispositif suivant l'une des revendications 13 à 15, carractérisé en ce que lesdites séries de rainures ou fentes (153) ou bien lesdits ensembles de trous séparés du manchon d'indexation (150) comprennent une première rainure ou fente axiale ou bien un premier groupe de trous disposés axialement sur ledit manchon, les autres rainures ou fentes (153) ou bien les autres groupes de trous étant respectivement curvilignes ou bien étant disposés sur les lignes incurvées.

## Claims

1. Control device for a cycle derailleur comprising a support 7, 107 for fixing to a part 1,101 of the frame or handlebar of the cycle, a lever 9, 109 for driving an actuating cable 10 of the derailleur and mounted so as to be rotatable about an axis X–X relative to the said support, indexation means located between the lever and the support, and means for adjusting the indexation means, characterised in that the adjusting means define a variable pitch between two successive positions of the indexation means.

2. Device according to claim 1, wherein the indexation means comprise a member 13,150 integral with the lever 9,109 and provided with at least one series of recesses 20,153 co-operating with a positioning member 19,154 carried by a fixed part 18,155 integral with the support 7,107, characterised in that the means for adjusting the variable pitch of the indexation means comprise the said member 13,150 which is integral with the lever and of which the recesses 20,153 are formed by grooves or slots defining between themselves pitches of variable value depending on their length, the fixed part 18,155 integral with the support 7,107 in which each positioning member 19,154 is mounted in a displaceable manner so as to occupy, in the grooves or slots in the member 13,150 integral with the lever, positions corresponding to the desired indexation pitch and a member 21,159 for displacing the said positioning members 19,154 in fixed part 18,155 integral with the support 7,107.

3. Device according to claim 1, wherein the indexation means comprise a member 13,150 integral with the lever 9,109 and provided with at least one series of recesses 20,153 co-operating with a positioning member 19,154 carried by a fixed part 18,155 integral with the support 7,107, characterised in that the means for adjusting the variable pitch of the indexation means comprise the said member 13,150 which is integral with the lever and the recesses of which are formed by groups of indents or holes disposed on lines defining between themselves the pitches of variable value according to their length, the fixed part 18,155 integral with the support 7,107 in which each positioning member 19,154 is displaceably mounted in order to occupy, in the indents or holes in the member 13,150 integral with the lever, positions corresponding to the desired indexation pitch, and a member 21,159 for displacing the said positioning members 19,154 in the fixed part 18,155 integral with the support 7,107.

4. Device according to either of claims 2 and 3, characterised in that the said member integral with the lever 9 is formed by an indexation washer 13 provided on one of its faces with two series of diverging grooves 20 or with two groups of indents disposed along diverging lines diametrically opposite in pairs, for receiving the positioning members in the form of balls 19 and comprising on its other face axial teeth 15 co-operating with complementary axial teeth 14 on the said lever 9, the said indexation washer being applied against the said member 21 for displacing the balls 19 by resilient means 16 placed between the support 7 and the said indexation washer 13, the balls 19 thus being held between the indexation washer 13 and the displacement member 21.

5. Device according to claim 4, characterised in that the said grooves 20 or the said lines along which the series of indents are disposed diverge towards the exterior of the said indexation washer 13.

6. Device according to claim 4, characterised in that the said grooves 20 or the said lines along which the series of indents are disposed diverge towards the interior of the said indexation washer 13.

7. Device according to any one of claims 4 to 6, characterised in that the fixed part 18 integral with the support 7 is formed by a washer placed between the indexation washer 13 and the displacement member 21, the said fixed washer 18 being provided with two diametrically opposite radial slots in each of which one of the said balls 19 is mounted so as to be displaceable.

8. Device according to any one of claims 4 to 7, characterised in that the member 21 for displacing the balls 19 consists of a selector washer provided on its face opposite the balls 19 with two recesses 22 in the form of curved slots extending symmetrically with respect to one another, from diametrically opposite points located on a small circle of said washer towards diametrically opposite points located on a circle with a larger diametr than the first circle, the balls 19 being held in the said grooves 22 through the radial slots 29 of the fixed washer 18 by the action of the said resilient means 16, the length of the grooves 22 of the displacement member 21 defining the travel of the balls when the indexation pitch is selected.

9. Device according to claim 8, characterised in that the selector washer 21 comprises on its face opposite the said grooves 22 hollows 26 which are evenly spaced apart over a portion of the small circle of the washer intended for selecting the indexation pitch; and in that it further comprises an interposed washer 24 provided with retractable lugs 25 for preventing rotation of the selector washer 21 in positions corresponding to the preselected pitches, by engaging in the hollows 26 corresponding with the said selector washer.

10. Device according to any one of claims 4 to 8, characterised in that the said recesses in the indexation washer 13 being formed by a group of separate indents extending along diverging lines of the said washer, the said indents 20 together with the balls 19 directly immobilize the selector member 21 in the angular position corresponding to the selected pitch.

11. Device according to any one of claims 4 to 10, characterised in that the said series of grooves 20 or the said groups of separate holes in the indexation washer 13 comprise a first radial groove 20 or a first group of holes disposed radially over the said washer, the other grooves or other groups of holes being respectively curved or being disposed on curved lines.

12. Device according to any one of claims 4 to 8, characterised in that the said series of grooves or the said groups of separate holes in the indexation washer 13 are respectively formed by straight grooves disposed with respect to one another along given angles or by groups of holes disposed along straight lines forming given angles between themselves.

13. Device according to either of claims 2 and 3, characterised in that the said member integral with the lever 109 is formed by an indexation sleeve 150 provided on its lateral surface with two series of diverging slots 153 or with two groups of separate holes disposed on diverging lines, diametrically opposite in pairs, for receiving the positioning members in the form of balls 154, the said indexation sleeve 150 being engaged in the lever 109 and rendered rotatably integral therewith, and surrounding a fixed sleeve 155 which constitutes the said fixed part integral with the support 107 and which is provided with two diametrically opposite axial slots 156 for guiding the balls 154, the said member 159 for displacing the balls being formed by a selector sleeve 159 rotatably mounted in the said fixed sleeve 155 and being provided with diametrically opposite helical slots 162 for driving the said balls 154 held in the axial slots 156 of the fixed sleeve 155, the balls being applied against the slots 153 or separate holes in the indexation sleeve 150 through the helical slots 162 in the selector sleeve 159 and axial slots 156 in the fixed sleeve 155 by a sleeve 163 with an elastic wall mounted inside the selector sleeve 159.

14. Device according to claim 13, characterised in that the selector sleeve 159 comprises a manoeuvring head 160 which receives an interposed washer 161 provided with diametrically opposite lugs 161a co-operating with the indents 158 for determining the indexation pitch, provided ina flange 157 on the fixed sleeve.

15. Device according to claim 13, characterised in that the said indexation sleeve 150 being provided with groups of separate holes disposed along divergent lines, these holes together with the balls 154 immobilize the selector member 159 in the angular position corresponding to the selected pitch.

16. Device according to any one of claims 13 to 15, characterised in that the said series of grooves or slots 153 or the said groups of separate holes in the indexation sleeve 150 comprise a first axial groove or slot or a first group of holes disposed axially along the said sleeve, the other grooves or slots 153 or the other groups of holes being respectively curved or being disposed on curved lines.

**Patentansprüche**

1. Steuervorrichtung für Fahrradkettenschaltung, mit einem Support (7; 107) der angepaßt ist, um auf einem Bereich (1; 101) des Rahmens oder des Lenkers des Fahrrads befestigt zu werden, einem Bedienungshebel (9; 109) für die Mitnahme eines Betätigungskabels (10) der Kettenschaltung, der drehbeweglich um eine Achse (X–X) bezüglich dieses Supports ist, mit Indexierungseinrichtungen zwischen dem Bedienungshebel und dem Support, und mit Einstelleinrichtungen der Indexierungseinrichtungen, dadurch gekennzeichnet, daß die Einstelleinrichtungen einen veränderlichen Schritt zwischen zwei aufeinanderfolgenden Stellungen der Indexierungseinrichtungen definieren.

2. Vorrichtung nach Anspruch 1, bei der die Indexierungseinrichtungen ein Organ (13; 150) aufweisen, das mit dem Bedienungshebel (9; 109) verbunden ist und mit wenigstens einer Reihe von Ausnehmungen (20; 153) versehen ist, die mit einem Positioniersorgan (19; 154) zusammenwirken, das von einem festen Teil (18; 155) getragen wird, das mit dem Support (7; 107) verbunden ist, dadurch gekennzeichnet, daß die Einstelleinrichtungen des veränderlichen Schritts der Indexierungseinrichtungen das genannte Organ (13; 150), das mit dem Bedienungshebel verbunden ist, und dessen Ausnehmungen (20; 153) durch Kerben oder Spalte definiert sind, aufweisen, die zwischen ihnen Schritte von veränderlichem Wert gemäß ihrer Länge definieren, wobei das feste Teil (18; 155), das mit dem Support (7; 107) verbunden ist, in dem jedes Positionierorgan (19; 154) bewegbar angeordnet ist, um in den Kerben oder Spalten des Organs (13; 150), das mit dem Bedienungshebel verbunden ist, Positionen zu besetzen, die dem gesuchten Indexierungsschritt entsprechen, und ein Bewegungsorgan (21; 159) der Positionierorgane (19; 154) in dem festen Teil (18; 155), das mit dem Support (7; 107) verbunden ist, aufweisen.

3. Vorrichtung nach Anspruch 1, bei der die Indexierungseinrichtungen ein Organ (13; 150) aufweisen, das mit dem Bedienungshebel (9; 109) verbunden ist, und mit wenigstens einer Reihe von Ausnehmungen (20; 153) versehen ist, die mit einem Positionierorgan (19; 154) zusammenwirken, das durch ein festes Teil (18; 155) getragen wird, das mit dem Support verbunden ist, dadurch gekennzeichnet, daß die Einstelleinrichtungen des veränderlichen Schritts der Indexierungseinrichtungen das genannte Organ (13; 150) aufweisen, das mit dem Bedienungshebel verbunden ist, und dessen Ausnehmungen von einer Anordnung von Vertiefungen oder Löchern gebildet ist, die auf Linien angeordnet sind, die untereinander die Schritte von veränderlichem Wert gemäß ihrer Länge bilden, wobei das feste Teil (18; 155) mit dem Support (7; 107) verbunden ist, in dem jedes Positionierorgan (19; 154) bewegbar angeordnet ist, um in den Vertiefungen oder Löchern des Organs (13; 150), das mit dem Bedienungshebel verbunden ist, Positionen einzunehmen, die dem gesuchten Indexierungsschritt entsprechen, und ein Bewegungsorgan (21; 159) der genannten Positionierorgane (19; 154) in dem festen Teil (18; 155) aufweisen, das mit dem Support (7; 107) verbunden ist.

4. Vorrichtung nach einem der Ansprüche 2 oder 3, dadurch gekennzeichnet, daß das genannte Organ, das mit dem Bedienungshebel (9) verbunden ist, durch ein Indexierungsrad (13) gebildet ist, das an einer seiner Seiten zwei Reihen von divergierenden Kerben (20) oder zwei Vertiefungsanordnungen aufweist, die auf divergierenden Linien angeordnet sind, die paarweise diametral gegenüber angeordnet sind, die dazu bestimmt sind, Positionierorgane in Form von Kugeln (19) aufzunehmen, und auf seiner anderen Seite eine axiale Zahnung (15) aufweist, die mit einer komplementären axialen Zahnung (14) des genannten Bedienungshebels (9) zusammenwirkt, wobei das genannte Indexierungsrad gegen das genannte Bewegungsorgan (21) der Kugeln (19) mittels elastischen Einrichtungen (16) gedrückt wird, die zwischen dem Support (7) und dem genannten Indexierungsrad (13) angeordnet sind, wobei die Kugeln (19) so zwischen dem Indexierungsrad (13) und dem Bewegungsorgan (21) gehalten sind.

5. Vorrichtung nach Anspruch 4, dadurch gekennzeichnet, daß die genannten Kerben (20) oder die genannten Linien auf denen die Reihen von Vertiefungen angeordnet sind, nach außen hin des genannten Indexierungsrades (13) divergieren.

6. Vorrichtung nach Anspruch 4, dadurch gekennzeichnet, daß die genannten Kerben (20) oder die genannten Linien auf denen die Reihen von Vertiefungen angeordnet sind, nach dem Inneren des Indexierungsrades (13) divergieren.

7. Vorrichtung nach einem der Ansprüche 4 bis 6, dadurch gekennzeichnet, daß das feste Teil (18), das mit dem Support (7) verbunden ist, durch ein zwischen dem Indexierungsrad (13) und dem Bewegungsorgan (21) befindliches Rad gebildet ist, wobei das feste Rad (18) mit zwei radialen Spalten versehen ist, die diametral einander gegenüberliegen, wobei in jeder von ihnen verschieblich bzw. bewegbar eine der genannten Kugeln (19) angeordnet ist.

8. Vorrichtung nach einem der Ansprüche 4 bis 7, dadurch gekennzeichnet, daß das Bewegungsorgan (21) der Kugeln (19) aus einem Wählrad gebildet ist, das an seiner den Kugeln (19) gegenüberliegenden Seite mit zwei Ausnehmungen (22) in Form von gebogenen Kerben versehen ist, die sich symmetrisch zueinander erstrecken, ausgehend von diametral einander gegenüberliegenden Punkten, die auf einem kleinen Kreis des genannten Rades zu diametral einander gegenüberliegenden Punkten sich erstrecken, die auf einem Kreis von größerem Durchmesser als dieser angeordnet sind, wobei die Kugeln (19) in den genannten Kerben (22) durch radiale Spalte (29) des festen Rades (18) unter Einwirkung der genannten elastischen Einrichtungen (16) gehalten werden, wobei die Länge der Kerben (22) des Bewegungsorgans (21) den Weg der Kugeln bei der Auswahl des Indexierungsschrittes definieren.

9. Vorrichtung nach Anspruch 8, dadurch gekennzeichnet, daß das Wählrad (21) auf seiner den Kerben (22) gegenüberliegenden Seite regelmäßig auf einem Bereich eines kleinen Kreises des Rades verteilte Hohlstellen (26) aufweist, die dazu bestimmt sind, die Wahl des Indexierungsschrittes herzustellen, und daß sie weiterhin ein Zwischenrad (24) aufweist, das mit einziehbaren Nasen bzw. Vorsprüngen (25) versehen ist zur Drehfixierung des Wählrades (21) in Stellungen, die den vorgewählten Schritten entsprechen, durch Eingriff in die entsprechenden Hohlstellen (26) des genannten Wählrades.

10. Vorrichtung nach einem der Ansprüche 4 bis 8, dadurch gekennzeichnet, daß die genannten Ausnehmungen des Indexierungsrades (13) aus einer Anordnung von getrennten Vertiefungen gebildet sind, die sich entlang divergierender Linien des genannten Rades erstrecken, wobei die genannten Vertiefungen (20) direkt mit den Kugeln (19) die Festlegung des Wählorgans (21) in der dem gewählten Schritt entsprechenden Winkelstellung sicherstellen.

11. Vorrichtung nach einem der Ansprüche 4 bis 10, dadurch gekennzeichnet, daß die genannten Kerbenreihen (20) oder die genannten Anordnungen von getrennten Löchern des Indexierungsrades (13) eine erste radiale Kerbe (20) bzw. eine erste Gruppe von Löchern aufweisen, die radial auf dem genannten Rad angeordnet sind, wobei die anderen Kerben bzw. die anderen Gruppen von Löchern entsprechend gebogen bzw. auf gebogenen Linien angeordnet sind.

12. Vorrichtung nach einem der Ansprüche 4 bis 8, dadurch gekennzeichnet, daß die genannten Reihen von Kerben bzw. die genannten Anordnungen von getrennten Löchern des Indexierungsrades (13) entsprechend durch geradlinige Kerben, die zueinander gemäß vorbestimmten Winkeln angeordnet sind, oder durch Gruppen von Löchern gebildet sind, die gemäß gerade Linien angeordnet sind, die zwischen ihnen vorbestimmte Winkel bilden.

13. Vorrichtung nach Anspruch 2 oder 3, dadurch gekennzeichnet, daß das Organ, das mit dem Bedienungshebel (109) verbunden ist, durch eine Indexierungshülse (150) gebildet ist, die auf ihrer Seitenfläche mit zwei divergierenden Spaltreihen (153) oder zwei Anordnungen von getrennten Löchern versehen ist, die auf divergierenden Linien, paarweise diametral gegenüberliegend angeordnet sind, die dazu bestimmt sind, Positionierorgane in Form von Kugeln (154) aufzunehmen, wobei die Indexierungshülse (150) in Eingriff steht mit dem Bedienungshebel (109) und in Drehverbindung mit diesem gesetzt wird, und eine feste Hülse (155) umgibt, die das genannte feste Teil, das mit dem Support (107) verbunden ist, bildet, und die mit zwei axialen Spalten (156) versehen ist, die einander diametral gegenüber angeordnet sind, zur Führung der Kugeln (154), wobei das Bewegungsorgan (159) der Kugeln durch eine Wählhülse (159) gebildet ist, die zur Drehung in der genannten festen Hülse (155) angeordnet und mit schraubenförmigen Spalten (162) versehen ist, die einander diametral gegenüberliegend angeordnet sind, zur Mitnahme der genannten Kugeln (154), die in den axialen Spalten (156) der festen Hülse (155) gehalten sind, wobei die Kugeln gegen die Spalten (153) oder getrennte Löcher der Indexierungshülse (150) durch die schraubenförmigen Spalten (162) der Wählhülse (159) und der axialen Spalten (156) der festen Hülse (155) durch einen Ring (163) mit elastischer Seitenwand gedrückt werden, der im Inneren der Wählhülse (159) angeordnet ist.

14. Vorrichtung nach Anspruch 13, dadurch gekennzeichnet, daß die Wählhülse (159) einen Betätigungskopf (160) aufweist, der ein Zwischenrad (161) aufnimmt, das mit diametral gegenüberliegenden Vorsprüngen (161a) versehen ist, die mit den Vertiefungen (158) der Bestimmung des Indexierungsschrittes zusammenwirken, die in einem Kragen (157) der festen Hülse (155) ausgebildet sind.

15. Vorrichtung nach Anspruch 13, dadurch gekennzeichnet, daß die genannte Indexierungshülse (150) mit einer Anordnung von getrennten Löchern versehen ist, die auf divergierenden Linien angeordnet sind, wobei diese Löcher direkt mit den Kugeln (154) die Festlegung des Wählorgans (159) in der entsprechenden Winkelstellung des gewählten Schrittes sicherstellen.

16. Vorrichtung nach einem der Ansprüche 13 bis 15, dadurch gekennzeichnet, daß die genannten Reihen von Kerben oder Spalten (153) bzw. die genannten Anordnungen von getrennten Löchern der Indexierungshülse (150) eine erste axiale Kerbe oder Spalte bzw. eine erste Gruppe von Löchern aufweisen, die axial auf der Hülse angeordnet sind, wobei die anderen Kerben oder Spalten (153) bzw. die anderen Gruppen von Löchern entsprechend gebogen bzw. auf gebogenen Linien angeordnet sind.

**FIG.1**

**FIG.2**

EP 0 275 723 B1

FIG.5

FIG.4

FIG.3a

FIG.3b

FIG.6    FIG.7

FIG.8